(19) Europäisches Patentamt
European Patent Office
Office européen des brevets

(11) Veröffentlichungsnummer: **0 130 460**
**B1**

(12) **EUROPÄISCHE PATENTSCHRIFT**

(45) Veröffentlichungstag der Patentschrift: **12.09.90**

(51) Int. Cl.[5]: **C 08 G 77/28,** C 08 G 77/392, C 08 G 77/06, D 06 M 15/643

(21) Anmeldenummer: **84107001.4**

(22) Anmeldetag: **19.06.84**

(54) **Organopolysiloxane mit Buntesalzgruppen, deren Herstellung und Verwendung zur Oberflächenbehandlung von anorganischen oder organischen Materialien.**

(30) Priorität: **02.07.83 DE 3323881**

(43) Veröffentlichungstag der Anmeldung:
**09.01.85 Patentblatt 85/02**

(45) Bekanntmachung des Hinweises auf die Patenterteilung:
**12.09.90 Patentblatt 90/37**

(84) Benannte Vertragsstaaten:
**BE DE FR GB IT NL**

(56) Entgegenhaltungen:
**FR-A-2 162 648**
**US-A-3 507 897**

(73) Patentinhaber: **Th. Goldschmidt AG**
**Goldschmidtstrasse 100 Postfach 101461**
**D-4300 Essen 1 (DE)**

(72) Erfinder: **Grüning, Burkhard**
**Waldsaum 11**
**D-4300 Essen (DE)**
Erfinder: **Holtschmidt, Ulrich**
**Veddershang 11**
**D-4300 Essen (DE)**
Erfinder: **Koerner, Götz**
**Kantorie 126**
**D-4300 Essen (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 130 460 B1**

**Beschreibung**

Die Erfindung betrifft Organopolysiloxane mit über Kohlenstoffatome an ein Siliciumatom gebundenen Buntesalzgruppen, die Herstellung dieser Verbindungen und ihre Verwendung zur Oberflächenbehandlung von anorganischen oder organischen Materialien, insbesondere in der Textilindustrie zur Behandlung von Fasern, Garnen, Geweben, Gewirken oder anderen textilen Gebilden zur Beeinflussung ihrer Oberflächeneigenschaften, wie z.B. Gleitfähigkeit, Griff oder Schrumpfeigenschaften, zur Imprägnierung von Papier oder Mineralwolle.

Unter Buntesalzen versteht man allgemein Alkali-S-alkyl- oder -arylthiosulfate. Erfindungsgemäß sollen unter dem Begriff Buntesalzgruppen die Alkali- oder Ammoniumsalze der an ein Kohlenstoffatom gebundenen Gruppe $—S_2O_3^{\ominus}$ umfaßt werden.

Buntesalze werden durch wäßrige Säuren unter Bildung von Thiolen hydrolysiert. In alkalischem Medium bilden sich unter anderem die entsprechenden Disulfide. Diese Reaktivität wird ausgenutzt, um Farbstoffe mit Buntesalzgruppen auf textilem Material zu fixieren. Die funktionellen Gruppen der Fasern, wie die OH-Gruppen der Cellulose, Amino- und Thiolgruppen der Wolle oder Säureamidgruppen synthetischer Polyamide, reagieren dabei als nucleophile Agentien. Nach Vorbehandlung von Cellulose mit Natriumsulfidlösung oder bei Behandlung von Wolle erfolgt auf dem Substrat eine Polykondensation unter Ausbildung von Disulfidbrücken. Eine entsprechende Färbung mit Buntesalzfarbstoffen ist deshalb naßfest. Verfahren zur Herstellung von Verbindungen mit Buntesalzgruppen, deren Eigenschaften und Verwendung sind in "Angewandte Chemie" 79 (1967) S. 520 ff. beschrieben.

Aus "Textile Research Journal" 62 (1982) S. 580 ff. ist die Verwendung von Buntesalzgruppen enthaltenden Polyethern zur Erhöhung der Schrumpffestigkeit von Wolle bekannt.

Siliciumorganische Verbindungen mit Buntesalzgruppen sind nur in Form der monomeren Silane beschrieben. Aus "J. Heterocyclic Chemistry" 5 (1968) 115 ist es bekannt, Chlormethyl- oder γ-Chlorpropyltrimethylsilane mit Aminoethanthioschwefelsäure umzusetzen. Es ist auch bereits beschrieben, Trimethylvinylsilan mit Ethylenimin und Ammoniumthiosulfat umzusetzen, wobei eine Verbindung der Formel $(CH_3)_3SiCH_2CH_2NHCH_2CH_2S_2O_3NH_4$ entsteht.

Organopolysiloxane mit Buntesalzgruppen sind noch nicht bekannt. Es war auch anzunehmen, daß deren Herstellung Schwierigkeiten bereiten würde, da die üblichen Herstellverfahren von Buntesalzen auf der Umsetzung reaktiver Verbindungen mit Alkalithiosulfat in polarem Medium beruhen, in dem Organopolysiloxane nicht oder nur gering löslich sind. Außerdem wird in "Angewandte Chemie" 79 (1967) S. 520 ff. berichtet, daß im allgemeinen 1.2-Epoxyalkane mit Natriumthiosulfat unter Ringöffnung zu Derivaten der 2-Hydroxyethansulfonsäure reagieren.

Gegenstand der Erfindung sind als neue Verbindungen Organopolysiloxane mit über Kohlenstoffatome an ein Siliciumatom gebundenen Buntesalzgruppen der allgemeinen Formel

$$R^1_a\text{-}\underset{\substack{|\\ R^2_b}}{Si}\text{-}O_{\frac{4-(a+b)}{2}} \qquad \text{I}$$

wobei

$R^1$ der Methylrest ist, jedoch bis zu 10% der Reste $R^1$ Alkylreste mit bis zu 18 Kohlenstoffatomen, Vinyl-, Phenyl-, Wasserstoff- oder Hydroxylreste sein können,

$R^2$ der Rest

$$-(CH_2)_3\text{-}OCH_2\text{-}\underset{\substack{|\\ R^3}}{CH}\text{-}CH_2\text{-}R^4$$ oder der Rest 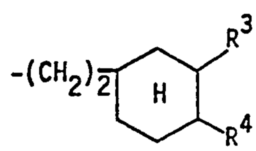

ist, wobei einer der Reste $R^3$, $R^4$ eine OH-Gruppe und der andere Rest eine $—S_2O_3Me$-Gruppe (Me = Alkali- oder, gegebenenfalls substituierter, Ammoniumrest) ist, wobei jedoch in bis zu 50% der Reste $R^2$ die Reste $R^3$ und $R^4$ Hydroxylreste oder gemeinsam der Sauerstoffrest eines Oxiranringes sein können,

a einen beliebigen Wert von 1 bis 2,33 und

b einen beliebigen Wert von 0,02 bis 1 hat.

Die Organopolysiloxane der allgemeinen Formel I können linear oder verzweigt sein, wobei a sowohl durch die Zahl der Buntesalzgruppen, durch den Verzweigungsgrad als auch durch die Kettenlänge bestimmt ist.

Bevorzugt sind Organopolysiloxane, bei denen der Rest $R^1$ der Methylrest ist. Es können bis zu 10% der Reste $R^1$ die Bedeutung eines Alkylrestes mit bis zu 18 Kohlenstoffatomen, die Bedeutung des Vinyl- oder Phenylrestes, eines Wasserstoff- oder Hydroxylrestes haben. Als Alkylreste mit bis zu 18 Kohlenstoffatomen sind insbesondere die Alkylreste bevorzugt, die sich von den entsprechenden Fettsäuren ableiten.

Die Gruppe $R^3$ oder $R^4$ hat die Bedeutung der Buntesalzgruppe, wobei die jeweils andere Gruppe eine Hydroxylgruppe ist, d.h., ist die Gruppe $R^3$ die Buntesalzgruppe, ist $R^4$ eine Hydroxylgruppe und umgekehrt ist $R^4$ eine Buntesalzgruppe, ist $R^3$ eine Hydroxylgruppe. Es ist jedoch möglich, daß bei einer nur teilweisen

Umsetzung bei einem Teil, nämlich bis zu 50% der Gruppen $R^2$, die Reste $R^3$ und $R^4$ den Sauerstoffrest eines Oxiranringes bedeuten, oder im Falle der Hydrolyse des Oxiranringes Hydroxylreste sind.

Innerhalb der Buntesalzgruppe ist das Kation Me ein Alkali- oder ein Ammoniumrest, wobei letzterer gegebenenfalls substituiert sein kann. Beispiele von substituierten Ammoniumresten sind der Tetrabutylammonium-, Tetramethylammonium- oder Didecyldimethylammoniumrest. Beispiele erfindungsgemäßer Organopolysiloxane sind Verbindungen der nachfolgenden Formeln

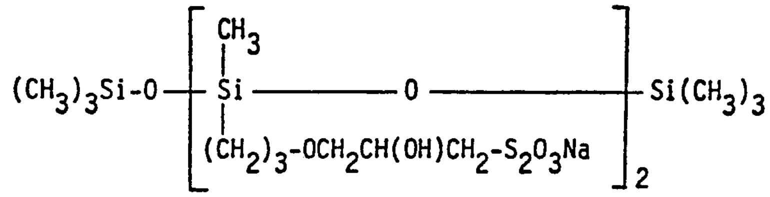

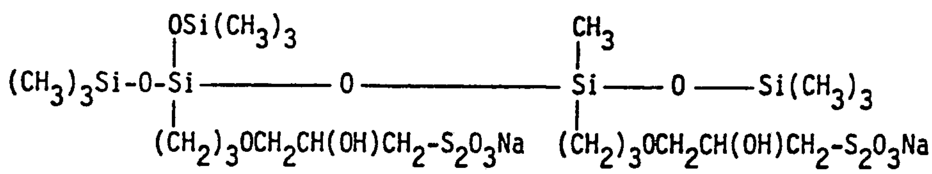

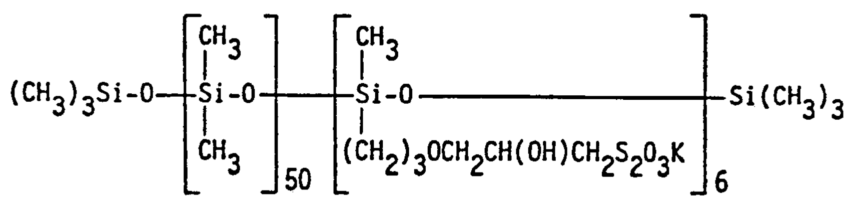

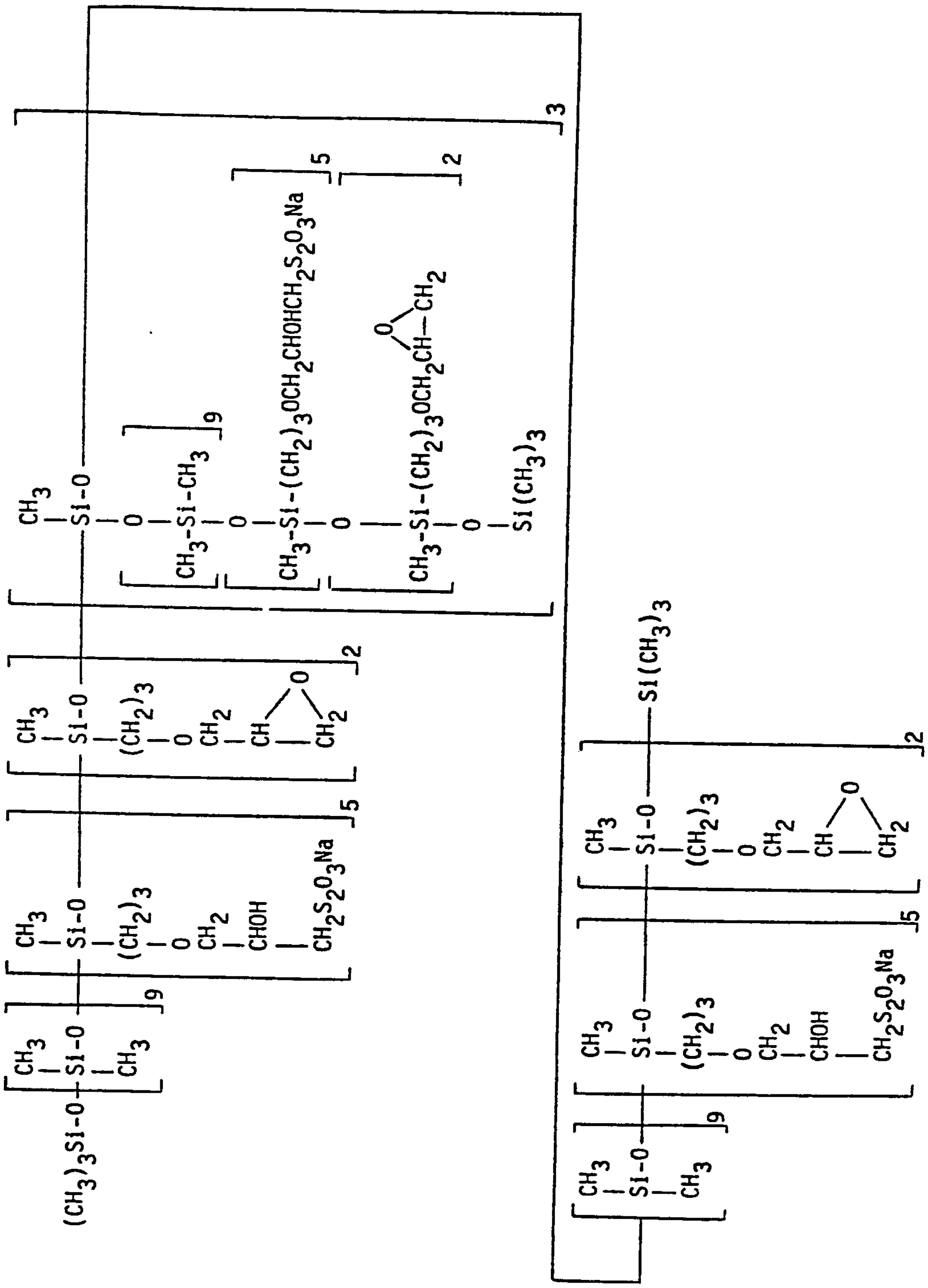

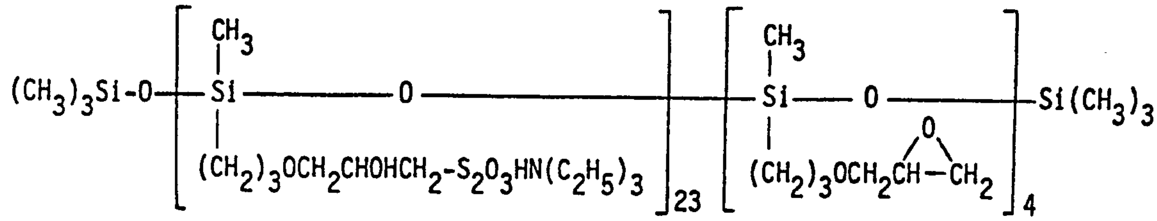

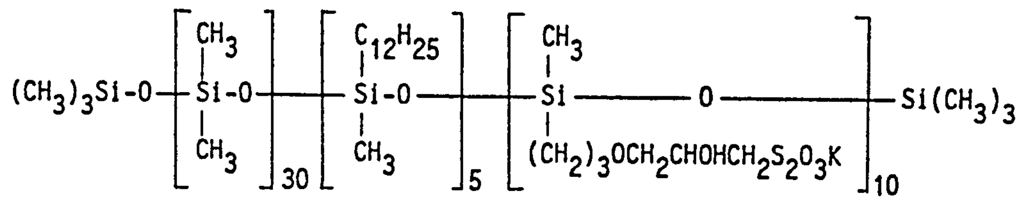

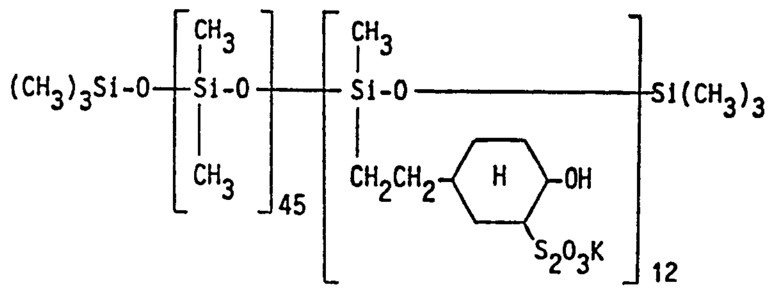

Die erfindungsgemäßen Verbindungen werden entsprechend eines weiteren Gegenstandes der Erfindung dadurch hergestellt, daß man Epoxygruppen enthaltende Organopolysiloxane der allgemeinen Formel

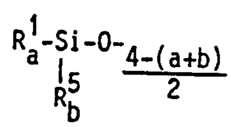

worin
$R^1$, a und b wie oben definiert sind und
$R^5$ die Gruppe

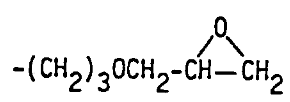

oder

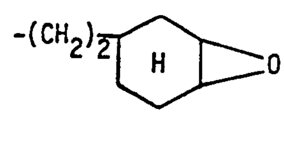

bedeutet, mit in bezug auf die Epoxygruppen halbmolaren bis zu äquimolaren Mengen $Me_2S_2O_3$ in wäßrigem Medium, dem gegebenenfalls polare organische Lösungsmittel zugesetzt sind, bei Temperaturen bis zu 100°C umsetzt, wobei während der Umsetzung Säuren in solchen Mengen zugesetzt werden, daß ein pH-Bereich von 5 bis 9 eingehalten wird.

Als organische polare Lösungsmittel werden vorzugsweise niedere aliphatische Alkohole, wie z.B. Ethanol oder Isopropanol verwendet, wobei je Vol.-Teil Wasser vorzugsweise 0,5 bis 5 Vol.-Teile organisches Lösungsmittel eingesetzt werden. Die Reaktion läuft bei Raumtemperatur oder mäßig erhöhten Temperaturen ab, wobei die Reaktionsgeschwindigkeit mit steigendem Molekulargewicht und steigender Hydrophobie der Polysiloxane abnimmt. Die Reaktion wird deshalb gegebenenfalls bei

Temperaturen bis zu 100°C durchgeführt. Zur Beschleunigung der Reaktion können dem Reaktionsgemisch Katalysatoren zugesetzt werden. Besonders geeignete Katalysatoren sind Phasentransfer-Katalysatoren. Beispiele solcher Katalysatoren sind

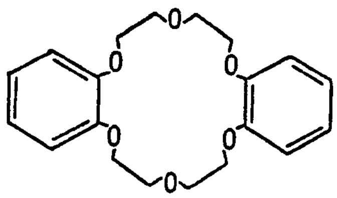

Dibenzo/¯18_7krone-6

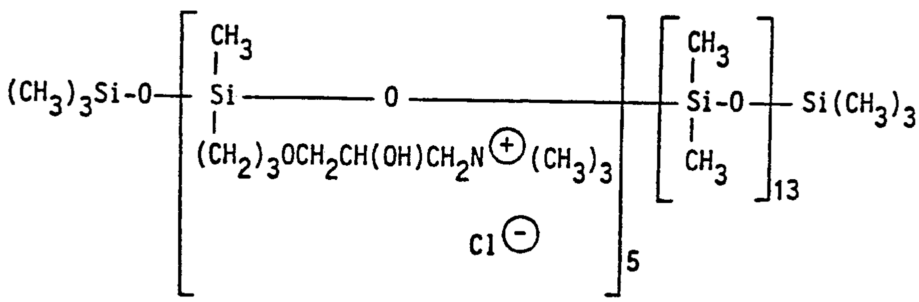

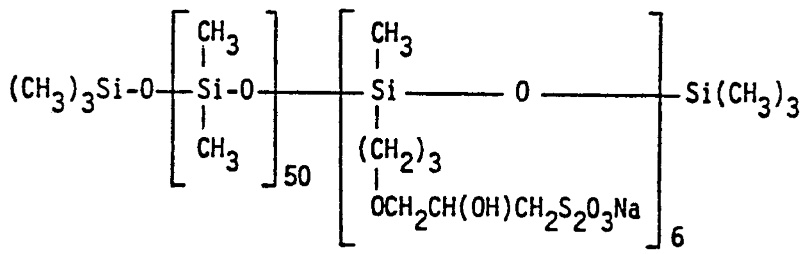

Es ist wesentlich, daß während der Umsetzung ein pH-Bereich von 5 bis 9 eingehalten wird. Dies erfolgt zweckmäßig durch Zugabe einer Säure, insbesondere durch Zugabe verdünnter Salzsäure oder Essigsäure. Man kann auch säureabspaltende Verbindungen oder geeignete, mit sauren Gruppen beladene Ionenaustauscher verwenden. Hierdurch wird erreicht, daß die Reaktion des Thiosulfates mit den Epoxygruppen des Polysiloxans vollständig abläuft. Es ist nicht zulässig, die zur Neutralisierung der freigesetzten Base notwendige Säure von Anfang an zuzusetzen, da man in diesem Falle durch das saure Medium das gebildete Buntesalz zersetzen würde. Es ist vielmehr wichtig, den geforderten pH-Berich von 5 bis 9 während der Reaktion aufrechtzuerhalten. Dies erfordert die kontrollierte und ständige Zugabe von Säure entsprechend dem Ablauf der folgenden Reaktion:

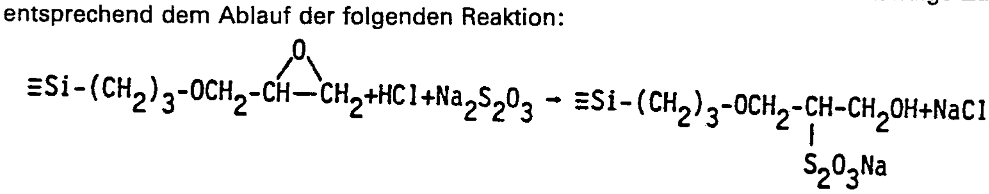

oder

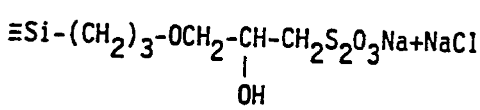

Die erfindungsgemäßen und nach dem vorgenannten Verfahren hergestellten Verbindungen sind je nach Molekulargewicht, Verzweigungsgrad und Gehalt an Buntesalzgruppen flüssige, pastöse oder feste Substanzen.

Die Verbindungen eignen sich zur Oberflächenbehandlung von anorganischen oder organischen Materialien. Sie erweisen sich in besonderem Maße zur Behandlung von textilen Materialien, insbesondere Wolle, als geeignet. Es ist ein besonderer Vorteil der erfindungsgemäßen Verbindungen, daß sie, auf textile Oberflächen aufgebracht, durch Zugabe von Natriumsulfid bereits bei Zimmertemperatur unter

Filmbildung vernetzen, so daß eine dauerhafte Ausrüstung des textilen Materials erfolgt. Dabei kann man Fasern, Garne, Gewebe, Gewirke, Vliese oder andere Materialien behandeln. Besonders eignen sich die erfindungsgemäßen Verbindungen zum Schrumpffestmachen von Wolle. Hierbei werden die erfindungsgemäßen Verbindungen in Form einer Lösung oder Dispersion in Wasser oder Wasser/Alkohol-Gemischen in Mengen von 0,1 bis 5% auf die Faser aufgebracht. Die erhaltenen Ausrüstungen sind beständig gegen organische Lösungsmittel, wie sie z.B. in der chemischen Reinigung verwendet werden. Im Gegensatz zu herkömmlichen Verfahren zur Ausrüstung von Wolle kann bei diesem Verfahren auf die oxidative Vorbehandlung der Faser verzichtet werden, was einen deutlichen Fortschritt bedeutet, da durch Behandlung mit Chlor oder Peroxiden die Faser wesentlich geschädigt werden kann.

Die erfindungsgemäßen, Buntesalzgruppen enthaltenden Siloxane können außer zur Behandlung von Textilien weiterhin sehr günstig zur hydrophobierenden Ausrüstung anderer fester Materialien, wie Papier oder Mineralwolle, eingesetzt werden. Die wesentliche Besonderheit der Buntesalzgruppen enthaltenden Siloxane liegt auch bei diesen Anwendungen darin, daß diese bereits bei Raumtemperatur durch die Zugabe von Sulfiden zur Vernetzung zu bringen sind.

Die Vergelung der Buntesalzgruppen enthaltenden Siloxane nach der Zugabe eines geeigneten Sulfides erfolgt sehr leicht, wie sich an einem Gel zeigt, werlches aus einem erfindungsgemäßen Siloxan aus wäßriger Lösung nach der Zugabe von Natriumsulfid nach 24 Stunden Reaktionszeit bei Raumtemperatur erhalten wird. Dieses Gel enthält keine nachweisbaren Buntesalzgruppen mehr, vielmehr haben nahezu alle ursprünglichen Buntesalzgruppen paarweise zu Disulfidbrücken reagiert.

Ein weiterer Vorteil der Buntesalzgruppen enthaltenden Siloxane besteht darin, daß diese sich in Wasser lösen und somit aus wäßriger Lösung angewendet werden können, sofern sie nur einen genügend großen Anteil ionogener Gruppen enthalten.

Da die üblicherweise zur hydrophobierenden Behandlung verwendeten Mittel nicht in Wasser löslich sind, müssen diese entweder aus organischen Lösungsmitteln oder aus Emulsionen aufgetragen werden. Dadurch entstehen aber entweder Probleme, die mit der möglichen Brennbarkeit oder der Beseitigung organischer Lösungsmittel verbunden sind, oder aber Probleme, die mit der möglichen Instabilität und Empfindlichkeit von Emulsionen in Zusammenhang stehen. Diese Schwierigkeiten treten bei der Anwendung wäßriger Lösungen erfindungsgemäßer Siloxane naturgemäß nicht auf.

Weil die erfindungsgemäßen Siloxane sowohl hydrophobe als auch hydrophile Gruppen enthalten, ist es nicht überraschend, daß ihnen ein tensidischer Charakter zukommt. Buntesalzgruppen enthaltende Siloxane senken daher die Oberflächenspannung von Wasser. Die Grenzflächenaktivität dieser Substanzen bedingt auch, daß die wäßriger Lösungen sich ausgezeichnet auf den zu behandelnden Feststoffen verteilen.

Papier kann durch Besprühen mit einer Natriumsulfidlösung und einer wäßrigen Lösung eines Buntesalzgruppen enthaltenden Siloxans bereits bei Raumtemperatur innerhalb einer halben Stunde hydrophobiert werden. Dagegen ist ein Papier, welches mit einer dem Stand der Technik entsprechenden Emulsion eines Wasserstoffsiloxans besprüht worden ist, auch nach 24 Stunden Lagerung bei Raumtemperatur nicht wasserabweisend ausgerüstet. Erst durch Erwärmen auf 60°C für mehrere Stunden wird das Papier auch durch die Wasserstoffsiloxan-Emulsion deutlich hydrophobiert.

Ebenso wie Papier kann Mineralwolle bei Raumtemperatur durch die Behandlung mit einem Buntesalzgruppen enthaltenden Siloxan dauerhaft hydrophobiert werden, wenn sie sowohl mit einer wäßrigen Lösung eines erfindungsgemäßen Siloxans als auch mit einer wäßrigen Natriumsulfidlösung behandelt wird.

Die Herstellung und Verwendung der erfindungsgemäßen Verbindungen wird in den nachfolgenden Beispielen noch näher erläutert.

## Beispiel 1

8,5 g (34,5 mMol) $Na_2S_2O_3 \cdot 5\ H_2O$ werden in 14 ml Wasser zusammen mit 350 mg des Kronenethers Dibenzo[18]krone-6

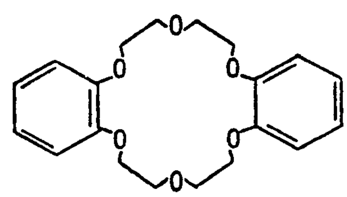

gelöst. 0,3 ml einer 0,1 %igen ethanolischen Phenolphthaleinlösung und 50 g (69 mVal Epoxyfunktionen) des epoxyfunktionellen Siloxans der folgenden mittleren Formel

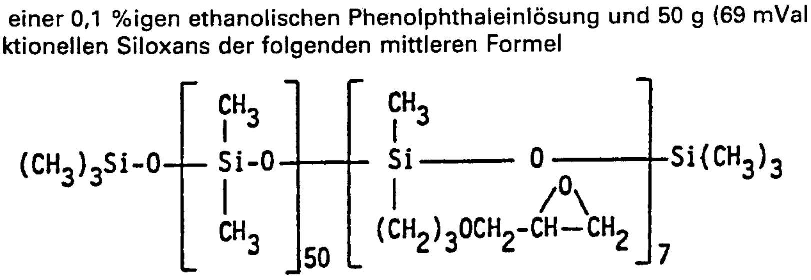

gelöst in 50 ml Ethanol, werden unter kräftigem Rühren hinzugefügt. Das Reaktionsgemisch wird zum Rückfluß erhitzt. Während der Reaktion steigt der pH-Wert. Zur Neutralisation werden aus einem Tropftrichter 12,6 g 10 %ige Salzsäure zugegeben; die Menge wird so bemessen, daß sie die Reaktionslösung gerade nicht mehr rot färbt. Nach etwa 3 Stunden ist die gesamte Menge Salzsäure zugegeben. Es wird noch eine weitere halbe Stunde unter Rückfluß erhitzt, während der keine Änderung des pH-Wertes mehr eintritt. Die Lösungsmittel werden unter vermindertem Druck entfernt. Das Produkt enthält 3,15% Natriumchlorid sowie den Phasentransfer-Katalysator. Freies Natriumthiosulfat läßt sich im Reaktionsgemisch analytisch nicht mehr feststellen. Dem Produkt wird die folgende mittlere Formel zugeordnet

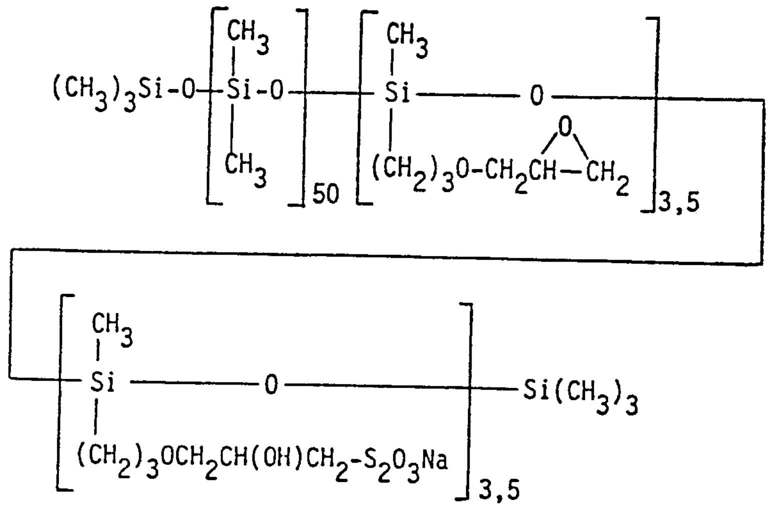

Beispiel 2

26,5 g (107 mMol) $Na_2S_2O_3 \cdot 5\ H_2O$ werden in 42 ml Wasser zusammen mit 650 mg des kationischen Siloxans der folgenden mittleren Formel

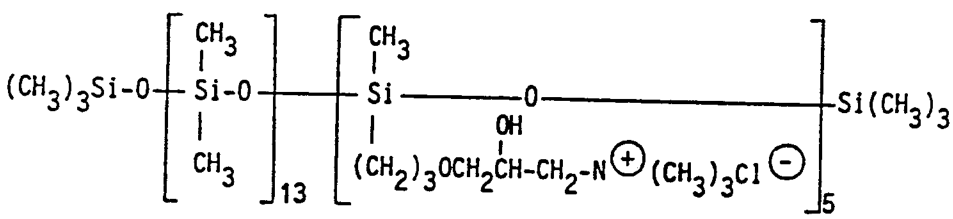

gelöst. 0,5 ml einer 0,1 %igen ethanolischen Phenolphthaleinlösung und 50 g (107 mVal Epoxyfunktionen) des epoxyfunktionellen Siloxans der mittleren Formel

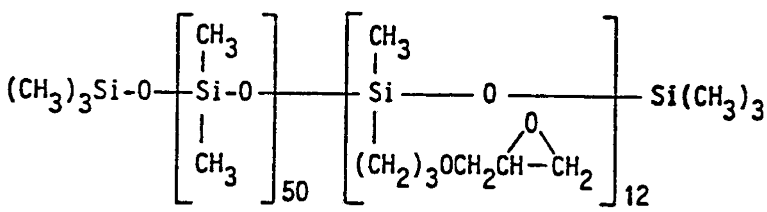

gelöst in 50 ml Isopropanol, werden unter kräftigem Rühren hinzugefügt. Das Reaktionsgemisch wird zum Rückfluß erhitzt. Während der Reaktion steigt der pH-Wert. Zur Neutralisation werden aus einer Injektionsspritze 6,42 g Essigsäure tropfenweise zugegeben; die Menge wird jeweils so bemessen, daß sich die Reaktionslösung gerade nicht mehr rot färbt. Nach etwa 3 Stunden ist die gesamte Menge Essigsäure zugegeben. Es wird noch eine weitere halbe Stunde unter Rückfluß erhitzt, während der keine Änderung des pH-Wertes mehr eintritt. Die Lösungsmittel werden unter vermindertem Druck entfernt. Das Produkt enthält 11,8% Natriumacetat sowie den Phasentransfer-Katalysator. Freies Natriumthiosulfat läßt sich im Reaktionsgemisch analytisch nicht mehr feststellen. Dem Produkt wird die folgende mittlere Formel zugeordnet

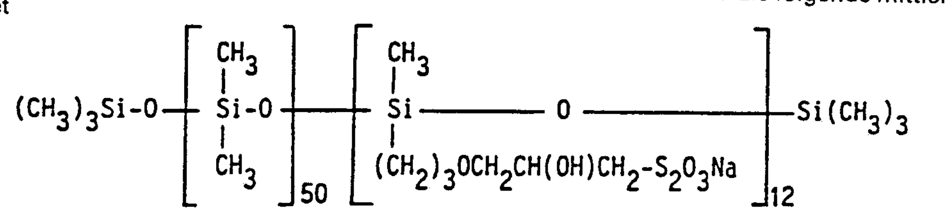

Beispiel 3

26,5 g (107 mMol) $Na_2S_2O_3 \cdot 5\ H_2O$ werden in 42 ml Wasser zusammen mit 720 mg des Buntesalzgruppen enthaltenden Siloxans, wie es in Beispiel 2 hergestellt worden ist, gelöst. 50 g (107 mVal Epoxyfunktionen) des epoxyfunktionellen Siloxans, wie es bereits in Beispiel 2 verwendet wurde, gelöst in 50 ml Isopropanol, werden unter kräftigem Rühren hinzugefügt. Das Reaktionsgemisch wird zum Rückfluß erhitzt. Die Änderung des pH-Wertes des Reaktionsgemisches wird über die Messung mit einer Elektrode verfolgt. Durch die Zugabe von stark saurem Ionenaustauscher (Lewatit S 100) wird der pH-Wert zwischen 7 und 8,5 gehalten. Nach etwa 3 Stunden Reaktionszeit tritt keine Änderung des pH-Wertes mehr ein. Nach dem Abkühlen wird der Ionenaustauscher abfiltriert. Die Lösungsmittel werden unter vermindertem Druck entfernt. Das Reaktionsprodukt enthält noch 3,4% freie $S_2O_3^{2-}$-Ionen, d.h., 81,5% der Epoxyfunktionen des Siloxans sind zu Buntesalzgruppen umgesetzt worden. Die Zusammensetzung des Produktes aus den Elementen ist unter Berücksichtigung des Anteils an Natriumthiosulfat berechnet worden.

| Elementaranalyse | | berechnet | gefunden |
|---|---|---|---|
| | C | 29,8% | 29,4% |
| | Na | 4,4% | 4,4% |
| | S | 9,7% | 9,8% |
| | Si | 23,4% | 23,0% |

Dem Produkt wird die folgende mittlere Formel zugeordnet

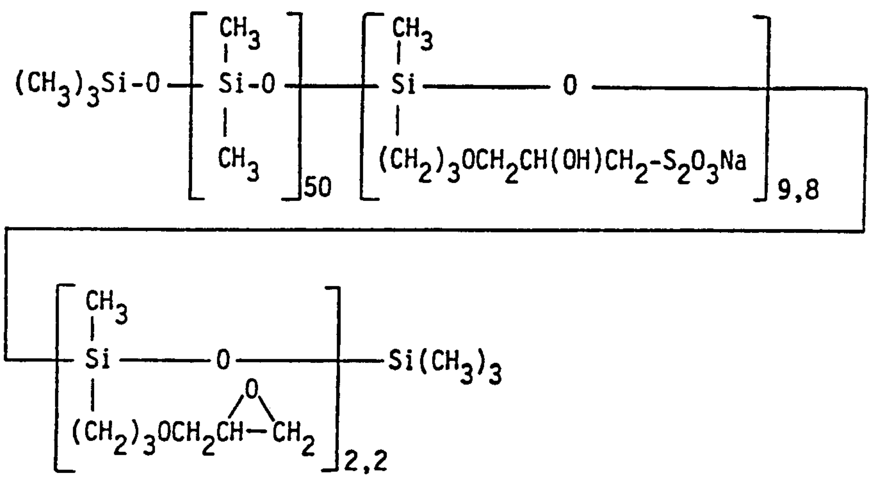

Beispiel 4

67,75 g (273 mMol) $Na_2S_2O_3 \cdot 5\ H_2O$ werden in 120 ml Wasser gelöst und mit 50 g eines epoxyfunktionellen Siloxans, dessen Epoxidzahl 8,7% (entspricht 8,7 Gew.-% Epoxid-Sauerstoff) beträgt, gelöst in 190 ml Ethanol, versetzt.

Das Siloxan enthält außerdem 0,03% Si-H-Wasserstoff; diesem kommt die folgende mittlere Formel zu

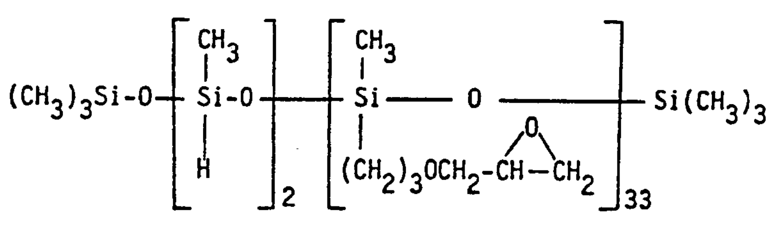

Nachdem dem Reaktionsgemisch 0,5 ml einer 0,1 %igen ethanolischen Phenolphthaleinlösung zugegeben worden sind, wird unter kräftigem Rühren zum Rückfluß erhitzt. Nach einer Induktionsperiode von 30 Minuten beginnt die Reaktion, was sich in einer Rotfärbung der Lösung zeigt. Während der folgenden 150 Minuten werden 16,4 g Essigsäure so zugetropft, daß sich die Lösung gerade nicht rot färbt. Nach 2 1/2 Stunden ist die Reaktion beendet, was daran zu erkennen ist, daß der pH-Wert sich nicht mehr ändert. Das anfänglich zweiphasige System ist in eine homogene Lösung übergegangen. Nach dem Abkühlen werden die Lösungsmittel unter vermindertem Druck entfernt. Das Produkt enthält 20,4% Natriumacetat. Freies Natriumthiosulfat läßt sich im Reaktionsgemisch analytisch nicht mehr feststellen.

Dem Reaktionsprodukt wird die folgende mittlere Formel zugeordnet

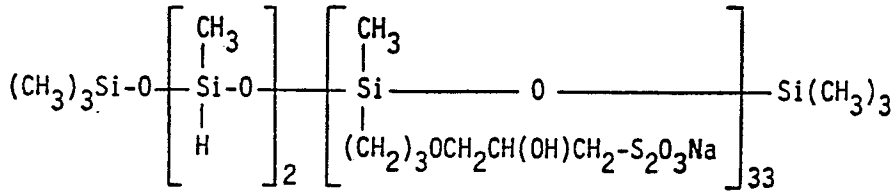

9,78 g (39,4 mMol) $Na_2S_2O_3 \cdot 5\ H_2O$ werden in 15 ml Wasser zusammen mit 300 mg des kationischen Siloxans, wie es auch in Beispiel 2 verwendet wird, gelöst. 0,2 ml einer 0,1 %igen ethanolischen Phenolphthaleinlösung und 20 g (39,4 mVal Epoxyfunktionen) des epoxyfunktionellen Siloxans der mittleren Formel

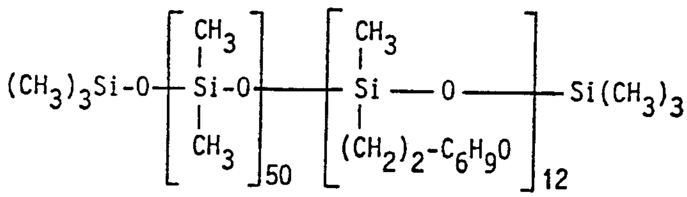

worin $C_6H_9O$ für den Cyclohexenoxidrest steht, gelöst in 25 ml Isopropanol, werden unter kräftigem Rühren hinzugefügt. Das Reaktionsgemisch wird zum Rückfluß erhitzt. Um den pH-Wert im Neutralbereich zu halten, werden während der Reaktion 2,3 g Essigsäure zugetropft. Die gesamte Reaktionszeit beträgt 36 Stunden. Nach dem Abkühlen werden die Lösungsmittel unter vermindertem Druck entfernt. Das Produkt enthält ca. 11% Natriumacetat und noch 0,9% Thiosulfatanionen. Daraus ergibt sich ein Umsatz von 94%.

### Beispiel 6

In 65 ml Wasser werden 10 g des Buntesalzgruppen enthaltenden Siloxans, wie es in Beispiel 2 hergestellt worden ist, gelöst. Zu dieser Lösung werden bei Raumtemperatur 1,23 g Natriumsulfid in 5 ml Wasser gegeben. Nach etwa 25 Minuten kann die Bildung eines Gels bereits deutlich beobachtet werden. Nach 24 Stunden Stehenlassen bei Raumtemperatur wird der gebildete polymere Feststoff zerkleinert und im Soxhlet zunächst mit Wasser und anschließend mit Methanol extrahiert. Nach sorgfältigem Trocknen wird folgende Elementaranalyse erhalten

| | |
|---|---|
| C: | 35,7% |
| Na: | 0,05% |
| S: | 5,9% |
| Si: | 28,0% |

Die gefundenen Werte entsprechen denjenigen, die für ein Polymeres erwartet werden, in dem je zwei Buntesalzgruppen stöchiometrisch und quantitativ miteinander unter Bildung einer Disulfidbrücke reagiert haben. Für ein solches Polymer werden berechnet

| | |
|---|---|
| C: | 35,9% |
| Na: | 0% |
| S: | 6,0% |
| Si: | 28,2% |

### Beispiel 7

Filterpapier wird durch die Anwendung eines erfindungsgemäßen Siloxans mit Buntesalzgruppen hydrophobiert. Zum Vergleich wird ein zweites Filterpapier mit einer Hydrophobieremulsion, die dem Stand der Technik entspricht, behandelt. Außerdem wird ein unbehandeltes Filterpapier zum Vergleich herangezogen.

a) Ein rundes Blatt Filterpapier (Schleicher und Schüll, Schwarzband) mit 11 cm Durchmesser wird zunächst mit 0,9 g einer 1 %igen Natriumsulfidlösung und anschließend mit 0,9 g einer 1,33 %igen Lösung des Buntesalzgruppen enthaltenden Siloxans, wie es in Beispiel 2 hergestellt worden ist, besprüht. Nach 30 Minuten Liegenlassen bei Raumtemperatur wird das Filterpapier gründlich mit Wasser gewaschen und über Nacht bei Raumtemperatur getrocknet.

b) Ein zweites Filterpapier wird mit 1,8 g einer 1,1 %igen Emulsion eines Wasserstoffsiloxans besprüht. Die Emulsion ist durch Verdünnen einer 40-%-Emulsion eines Wasserstoffsiloxans der mittleren Formel

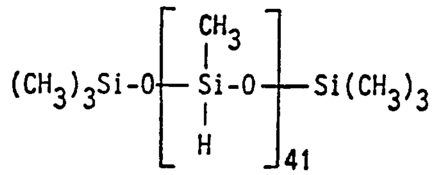

erhalten worden. Das Filterpapier wird nicht gewaschen, sondern lediglich über Nacht getrocknet.

c) Ein unbehandeltes Filterpapier wird zum Vergleich herangezogen.

Die drei Filterpapiere werden mit Wassertropfen belegt, dabei werden die folgenden Ergebnisse erhalten

a) Das Filterpapier wird durch die Wassertropfen nicht benetzt. Auch nach 8 Stunden ist noch kein Wasser in das Filterpapier eingedrungen; die Wassertropfen sind lediglich durch Verdunstung kleiner geworden.

b) Das Filterpapier wird zunächst durch die Wassertropfen nicht benetzt, aber bereits nach wenigen Minuten zeigt sich, daß die Wassertropfen langsam aufgesogen werden. Nach 1 Stunde sind alle Wassertropfen in das Filterpapier eingedrungen.

c) Das Wasser wird sofort vom Filterpapier aufgenommen.

Auf die drei Filterpapiere werden mit 0,5 ml Wasser gefüllte 1-ml-Meßpipetten aufgesetzt. Das Wasser kann aus den Meßpipetten nur durch Eindringen in das Filterpapier entweichen. Es wird die Zeit gemessen, in der der Inhalt der Meßpipetten von 0,5 auf 0,1 ml sinkt. Dabei werden die folgenden Ergebnisse erhalten

| | Entleerung von 0,5 auf 0,1 ml in Minuten |
|---|---|
| Filterpapier a) | >>420 |
| Filterpapier b) | 21 |
| Filterpapier c) | 6,5 |

Bemerkung: nach 7 Std. hat sich die Pipette von 0,5 auf 0,35 ml entleert

## Beispiel 8

Mineralwolle, wie sie in Dämmatten zur Wärme- und Schallisolierung im Bausektor verwendet wird, bestehend aus Fasern mit einem Durchmesser <5 µm und einer Länge von 3 bis 5 cm, wird mit einem Buntesalzgruppen enthaltenden Siloxan hydrophobiert. Dazu wird die Mineralwolle zunächst in eine 1 %ige wäßrige Lösung des Buntesalzgruppen enthaltenden Siloxans, dessen Herstellung in Beispiel 2 beschrieben ist, getaucht, abgetropft und ausgedrückt und anschließend kurz in eine 0,5 %ige Natriumsulfidlösung eingetaucht und wiederum abgetropft. Die Mineralwolle läßt man bei Raumtemperatur trocknen.

Unbehandelte und in beschriebener Weise behandelte Mineralwolle werden in mit Wasser gefüllte Bechergläser gegeben. Während unbehandelte Mineralwolle sofort durch Wasser benetzt wird und untergeht, wird die mit dem Buntesalzgruppen enthaltenden Siloxan und Natriumsulfid behandelte Mineralwolle nicht benetzt. Sie schwimmt auch nach einer Woche noch unverändert auf dem Wasser.

## Beispiel 9

Ein fein gewirktes Feinwollmaterial wird mit einer Flotte von 1,4% eines Buntesalzgruppen enthaltenden Polysiloxans, dessen Herstellung in Beispiel 2 beschrieben ist, imprägniert, zur Aushärtung mit einer 0,3 %igen Lösung von $Na_2S \cdot 9\,H_2O$ behandelt und im Tumbler bei 45°C getrocknet. Das behandelte Feinwollmaterial zeigt einen weichen, vollen Griff. Im gemäß der Testmethode des IWS "International Wool Secretariat" durchgeführten Cubex-Test 'IWS-Prüfmethode Nr. 8/185" zeigt das so ausgerüstete Material im Vergleich zu einer unbehandelten Probe eine deutlich verringerte Schrumpfneigung und ein wesentlich verbessertes Pillverhalten. Die folgenden Ergebnisse werden erhalten

| | Flächenfilzschrumpf % | Warenbild |
|---|---|---|
| unbehandeltes Material | 52 | stark verpillt |
| erfindungsgemäß behandeltes Material | 11 | nahezu unverändert |

**Patentansprüche**

1. Organopolysiloxane mit über Kohlenstoffatome an ein Siliciumatom gebundenen Buntesalzgruppen der allgemeinen Formel

$$R^1_a-\underset{\underset{R^2_b}{|}}{Si}-O_{\frac{4-(a+b)}{2}}$$

wobei

$R^1$ der Methylrest ist, jedoch bis zu 10% der Reste $R^1$ Alkylreste mit bis zu 18 Kohlenstoffatomen, Vinyl-, Phenyl-, Wasserstoff- oder Hydroxylreste sein können,

$R^2$ der Rest

$$-(CH_2)_3-OCH_2-\underset{\underset{R^3}{|}}{CH}-CH_2-R^4$$ oder der Rest 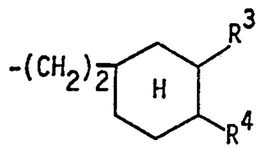

ist, wobei einer der Reste $R^3$, $R^4$ eine OH-Gruppe und der andere Rest eine $—S_2O_3Me$-Gruppe (Me = Alkali- oder, gegebenenfalls substituierter, Ammoniumrest) ist, wobei jedoch in bis zu 50% der Reste $R^2$ die Reste $R^3$ und $R^4$ Hydroxylreste oder gemeinsam der Sauerstoffrest eines Oxiranringes sein können,

a einen beliebigen Wert von 1 bis 2,33 und

b einen beliebigen Wert von 0,02 bis 1 hat.

2. Verfahren zur Herstellung von Organopolysiloxanen nach Anspruch 1, dadurch gekennzeichnet, daß man Epoxygruppen enthaltende Organopolysiloxane der allgemeinen Formel

$$R^1_a-\underset{\underset{R^5_b}{|}}{Si}-O_{\frac{4-(a+b)}{2}}$$

worin

$R^1$, a und b wie oben definiert sind und

$R^5$ die Gruppe

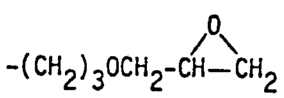 oder 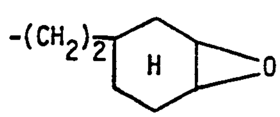

bedeutet, mit in bezug auf die Epoxygruppen halbmolaren bis zu äquimolaren Mengen $Me_2S_2O_3$ in wäßrigem Medium, dem gegebenenfalls polare organische Lösungsmittel zugesetzt sind, bei Temperaturen bis zu 100°C umsetzt, wobei während der Umsetzung Säuren in solchen Mengen zugesetzt werden, daß ein pH-Bereich von 5 bis 9 eingehalten wird.

3. Verfahren nach Anspruch 2, dadurch gekennzeichnet, daß man die Reaktion in Gegenwart von Phasentransfer-Katalysatoren durchführt.

4. Verwendung der Verbindungen nach Anspruch 1 zur Oberflächenbehandlung von anorganischen oder organischen Materialien.

**Revendications**

1. Organopolysiloxanes contenant des groupes de sels de Bunte liés à un atome de silicium par des atomes de carbone et répondant à la formule générale:

$$R^1_a-\underset{\underset{R^2_b}{|}}{Si}-O_{\frac{4-(a+b)}{2}} \quad I$$

dans laquelle

$R^1$ est le groupe méthyle, jusqu'à 10% des groupes $R^1$ pouvant toutefois être des groupes alcoyle contenant jusqu'à 18 atomes de carbone, ou des groupes vinyle, phényle, hydrogène ou hydroxyle,

$R^2$ est le groupe

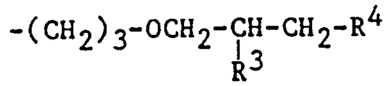 ou le groupe :

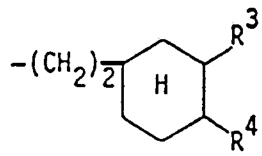

dans lesquels un des groupes $R^3$, $R^4$ est un groupe —OH et l'autre groupe est un groupe —$S_2O_3Me$— (Me = groupe alcali ou groupe ammonium éventuellement substitué), jusqu'à 50% des groupes $R^2$ pouvant toutefois être les groupes $R^3$ et $R^4$ des groupes hydroxyle ou, ensemble, le groupe oxygène d'un composé cyclique d'oxiranne,

a a une valeur quelconque allant de 1 à 2,33 et

b a une valeur quelconque allant de 0,02 à 1.

2. Procédé de préparation d'organopolysiloxanes selon la revendication 1, caractérisé en ce qu'on fait réagir des organopolysiloxanes, contenant des groupes époxy, de formule générale

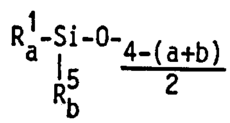

dans laquelle

$R^1$, a et b sont définis comme précédemment et

$R^5$ signifie le groupe

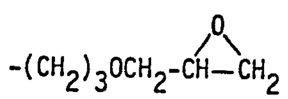 ou 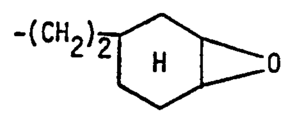

avec, par rapport aux groupes époxy, des quantités demimolaires à équimolaires de $Me_2S_2O_3$ en milieu aqueux, auquel on ajoute éventuellement des solvants polaires organiques, à une température pouvant aller jusqu'à 100°C, des acides étant ajoutés pendant la réaction de manière telle qu'on se conforme à une plage de pH allant de 5 à 9.

3. Procédé selon la revendication 2, caractérisé en qu'on effectue la réaction en présence de catalyseurs de transfert de phases.

4. Application des composés selon la revendication 1 pour le traitement de surface de matières inorganiques ou organiques.

**Claims**

1. Organopolysiloxanes containing Bunte salt groups bonded via carbon atoms to a silicon atom and having the general formula

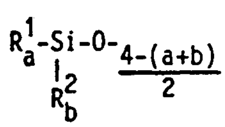

in which

$R^1$ is methyl, but up to 10% of the radicals $R^1$ may be alkyl having up to 18 carbon atoms, vinyl, phenyl, hydrogen or hydroxyl,

$R^2$ is the radical

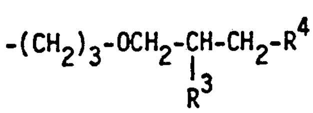 or the radical 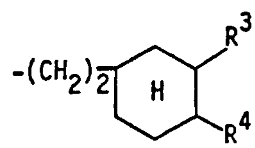

in which one of the radicals $R^3$ and $R^4$ is a hydroxyl group and the other radical is a $—S_2O_3Me$ group (Me = alkali metal radical or optionally substituted ammonium radical) it being possible however in up to 50% of the radicals $R^2$ for the radicals $R^3$ and $R^4$ to be hydroxyl or to jointly form the oxygen radical of an oxirane ring,

a has any value from 1 to 2.33 and

b has any value from 0.02 to 1.

2. Process for the preparation of organopolysiloxanes according to Claim 1, characterized in that epoxy-containing organopolysiloxanes of the general formula

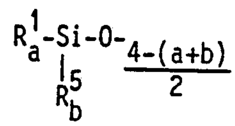

in which

$R^1$, a and b are as defined above and

$R^5$ denotes the group

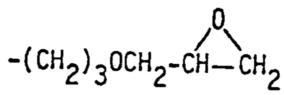 or 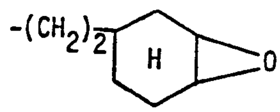

are reacted at temperatures of up to 100°C with, relative to the epoxy groups, half-molar to equimolar amounts of $Me_2S_2O_3$ in an aqueous medium to which polar organic solvents are optionally added, and during the reaction acids are added in amounts required to maintain a pH in the range from 5 to 9.

3. Process according to claim 2, characterized in that the reaction is carried out in the presence of phase-transfer catalysts.

4. The use of compounds according to claim 1 for the surface treatment of inorganic or organic materials.